# EUROPEAN PATENT APPLICATION

(11) **EP 4 571 163 A1**
(43) Date of publication of application: **18.06.2025**
(21) Application number: 23936335.1
(22) Date of filing: 08.09.2023
(51) Int. Cl.: F16L 23/16, F16L 23/032, H01M 10/6556

(54) **CONDUIT CONNECTING ASSEMBLY, LIQUID COOLING SYSTEM, BATTERY AND ELECTRIC DEVICE**

(30) Priority: 10.05.2023 CN 202310520584
(71) Applicant: Contemporary Amperex Technology (Hong Kong) Limited, Central, Hong Kong (HK)
(72) Inventor: WU, Kai, Ningde, Fujian 352100 (CN); SONG, Feiting, Ningde, Fujian 352100 (CN); ZHOU, Cong, Ningde, Fujian 352100 (CN); HOU, Yuepan, Ningde, Fujian 352100 (CN)
(74) Representative: Laufhütte, Dieter
(86) International application number: PCT/CN2023/117674
(87) International publication number: WO 2024/230029

(57) **Abstract**

A pipe connection assembly, a liquid cooling system, a battery and an electric apparatus are provided. The pipe connection assembly (10) includes a first connector (11) and a first connection pipe (12), the first connector is configured to communicate with a liquid cooling plate (30); the first connection pipe includes a sealing section (121) and a connecting section (122) communicating with each other, the sealing section hermetically communicates with the first connector, and an inner diameter of the connecting section is less than that of the sealing section. The first connector is hermetically inserted into the sealing section; the sealing section is provided in a quantity of two and the two sealing sections are respectively disposed at two ends of the connecting section; and the first connector is provided in a quantity of two and the two first connectors are inserted into the two sealing sections in one-to-one correspondence. The foregoing pipe connection assembly can ensure that fluxes in different branches are uniform.

## Description

This application claims priority to Chinese patent application No. 202310520584.4, filed with the China National Intellectual Property Administration on May 10, 2023 and entitled "PIPE CONNECTION ASSEMBLY, LIQUID COOLING SYSTEM, BATTERY AND ELECTRIC APPARATUS", which is incorporated herein by reference in its entirety.

### TECHNICAL FIELD

This application pertains to the field of battery technologies, and in particular, relates to a pipe connection assembly, a liquid cooling system, a battery and an electric apparatus.

### BACKGROUND

In a pipe connection assembly consisting of a connector and a connection pipe, because of an inserted connection manner of the connector and the connection pipe, there is usually a certain reducing zone, and as a result, a liquid undergoes a pressure change when flowing in the pipe connection assembly, and the pressure change is uncontrollable, which cannot meet use needs in some special situations.

### SUMMARY

An objective of embodiments of this application is to provide a pipe connection assembly, a liquid cooling system, a battery and an electric apparatus, so as to alleviate the technical problem that the application scope of existing pipe connection assemblies are limited.

### TECHNICAL SOLUTION

According to a first aspect, this application provides a pipe connection assembly, including a first connector and a first connection pipe, where the first connector is configured to communicate with a liquid cooling plate; and the first connection pipe includes a sealing section and a connecting section communicating with each other, the sealing section hermetically communicates with the first connector, and an inner diameter of the connecting section is less than that of the sealing section.

The pipe connection assembly provided in this application includes the first connector and the first connection pipe, the first connection pipe includes a sealing section and a connecting section communicating with each other, and an inner diameter of the connecting section is less than that of the sealing section, which can reduce a pressure loss of the liquid and pressure drop to some extent or further increase the pressure loss of the liquid and pressure drop to some extent compared with a condition that the inner diameter of the connecting section is greater than or equal to that of the sealing section, thereby meeting use needs in some special situations and expanding a scope of application of the pipe connection assembly. The pipe connection assembly provided in this application can be used for both communication of an ordinary pipe and communication of a pipe with a special requirement. For example, in a liquid cooling system, the change in the pressure drop is controlled, so that the pipe connection assembly in this application is used together with an ordinary pipe connection assembly, to implement the same flux in different liquid cooling plates and improve a heat dissipation effect.

In some embodiments, the inner diameter of the connecting section is greater than or equal to that of the first connector. The inner diameter of the connecting section is equal to the inner diameter of the first connector, so that a flow state of the liquid does not change sharply after the liquid flows from the first connector to the connecting section, which can reduce a pressure loss of the liquid and pressure drop to some extent, to be applicable to a liquid cooling system requiring balanced fluxes. The inner diameter of the connecting section is greater than the inner diameter of the first connector, so that flow resistance can be controlled to some extent; and for example, a value of the inner diameter of the connecting section is controlled to control the value of the flow resistance, so that flow resistance can be controlled when the liquid flows from the first connector to the connecting section and the pressure drop can be controlled, to be applicable to water cooling systems requiring different pressure drops, thereby improving performance of the liquid cooling system using the pipe connection assembly provided in this embodiment.

In some embodiments, the inner diameter of the connecting section is less than that of the first connector. In this way, an area of a longitudinal cross section of the connecting section can be further reduced, so that the flow space becomes smaller when the liquid flows from the first connector to the connecting section; and the friction between particles is intensified, which can further increase the pressure loss of the liquid and the pressure drop compared with a condition that the inner diameter of the connecting section is greater than or equal to the inner diameter of the sealing section.

In some embodiments, the first connector is hermetically inserted into the sealing section. The first connector is inserted into the sealing section in a hermetic insertion manner, so that the first connector and the sealing section have a simple connection structure and are easy to assemble.

In some embodiments, the sealing section is provided in a quantity of two and the two sealing sections are respectively disposed at two ends of the connecting section; and the first connector is provided in a quantity of two and the two first connectors are inserted into the two sealing sections in one-to-one correspondence. The structure provided in this embodiment facilitates respective communication between the same first connection pipe and two liquid cooling plates, which can improve assembly efficiency.

In some embodiments, inner diameters of the two first connectors are equal. With the structure provided in this embodiment, provided that the inner diameter of the connecting section is the same as an inner diameter of any first connector, an inner cavity of the pipe connection assembly formed by combining two first connectors and the first connection pipe can be a constant-section cavity or similar to the constant-section cavity, which facilitates design, processing and assembly of all components in the pipe connection assembly.

In some embodiments, the first connector is sealed by the sealing section with interference. The first connector and the sealing section are sealed through interference fit, which implements a simple sealing manner and facilitates assembly.

In some embodiments, the first connection pipe includes an inner pipe and an outer pipe fitted over the inner pipe; the inner pipe has elasticity, and the inner pipe includes a first pipe section and a second pipe section communicating with each other, and an inner diameter of the second pipe section is less than that of the first pipe section; and a portion, corresponding to the second pipe section, of the outer pipe and the second pipe section are combined to form the connecting section, and a portion, corresponding to the first pipe section, of the outer pipe and the first pipe section are combined to form the sealing section.

The first connection pipe uses the structure provided in this embodiment, which can entitle different zones to different functions and facilitate assembly. When the first connector is inserted into the sealing section and connected with the first connection pipe, that is, the first connector is inserted into the first pipe section of the inner pipe, the inner pipe is entitled to the elasticity, so that sealing of the first connector and the inner pipe can be implemented through interference fit, thereby facilitating communication between the first connector and the first connection pipe.

In some embodiments, a restraint structure is protrusively disposed at a portion, corresponding to the second pipe section, of an inner wall of the outer pipe, the restraint structure and the second pipe section are combined to form a combined restraint structure, and the combined restraint structure restrains an insertion depth of the first connector by abutting against the first connector. In this way, the insertion depth of the first connector into the first connection pipe can be limited to some extent, so that the first connector can be confined in the sealing section, thereby reducing an adverse effect caused by an excessively great insertion depth of the first connector. In addition, the first connector is installed in such a way that the first connector abuts against the combined restraint structure, insertion depths of the first connector in different pipe connection assemblies can be consistent, thereby implementing standardized assembly.

In some embodiments, a height of a portion, protruding from the inner wall of the outer pipe, of the restraint structure is greater than or equal to a distance between an outer wall of an insertion end of the first connector and the inner wall of the outer pipe. The restraint structure uses the structure provided in this embodiment, which exerts a good restraint effect on the insertion depth of the first connector into the first connection pipe, so that restraint reliability of the restraint structure can be higher.

In some embodiments, the restraint structure is an annular structure wound on the inner wall of the outer pipe. The restraint structure uses the annular structure, the first connector can come into contact with different zones of the first connector when being inserted into the first connection pipe, and compared with a case of disposing the restraint structure only on one side of the outer pipe, a risk of an oblique insertion direction of the first connector caused due to existence of the restraint structure can be reduced to some extent, and the restraint reliability is improved.

In some embodiments, the inner diameter of the annular structure is less than or equal to the outer diameter of the first connector. The inner diameter of the annular structure is less than or equal to the outer diameter of the first connector, which can further reduce a risk of entering the connecting section by the first connector and reduce an adverse effect caused due to an excessive insertion depth of the first connector compared with a condition that the inner diameter of the annular structure is greater than the outer diameter of the first connector.

In some embodiments, a recessed structure is formed in a portion, corresponding to the restraint structure, of an outer wall of the inner pipe, and the recessed structure is configured to accommodate the restraint structure. The recessed structure is disposed, so that an outer wall contour of the inner pipe can be consistent with or similar to an inner wall contour of the outer pipe, to reduce, to some extent, a deformation risk of the inner pipe when squeezed due to the existence of the restraint structure after the inner pipe and the outer pipe are combined, thereby improving structural stability of the inner pipe and assembly efficiency of the inner pipe and the outer pipe.

In some embodiments, an outer diameter of the second pipe section is less than that of the first pipe section, and the recessed structure is enclosed by an outer wall of the second pipe section and a connection surface between the second pipe section and the first pipe section. The recessed structure is enclosed by the outer wall of the second pipe section and the connection surface between the second pipe section and the first pipe section, and can be directly formed when the inner pipe is prepared without secondary processing, which can improve processing efficiency.

In some embodiments, the inner pipe is an integral piece; and/or the outer pipe is an integral piece. When the inner pipe is the integral piece, the inner pipe has a stable structure and is easy to prepare. When the outer pipe is the integral piece, the outer pipe has a stable structure and is easy to prepare.

In some embodiments, the inner pipe is a flexible pipe; and/or the outer pipe is a rigid pipe. When the inner pipe is the flexible pipe, it is easy for the inner pipe to be interference fitted with the first connector, to implement a hermetic connection therebetween. When the outer pipe is the rigid pipe, the inner pipe is unlikely to deform after the outer wall of the first connection pipe is subjected to an external force, and therefore, the inner wall of the first connection pipe is unlikely to deform, and a flow rate, a flux and the like of the liquid in the first connection pipe are unlikely to change, thereby reducing the pressure drop to some extent when the liquid passes through the pipe connection assembly.

In some embodiments, the inner pipe is a rubber pipe. When the inner pipe is the rubber pipe, the inner pipe has good elastic performance, is made of handy materials and has low costs.

In some embodiments, the outer pipe is an alloy pipe or a nylon pipe. When the outer pipe is the alloy pipe, P12 alloy pipe may be used, or an aluminum alloy pipe, a stainless steel pipe, or the like can be used, which can be specifically flexibly selected based on a use need, so that the outer pipe can be unlikely to deform and has good mechanical performance, and an effect on the shape of the inner pipe can be avoided when the outer pipe is subjected to an external force, thereby meeting the use need. When the outer pipe is the nylon pipe, the outer pipe is harder than the inner pipe. When the first connector is inserted into the first connection pipe with interference, the outer pipe applies a relatively great holding force on the inner pipe and the first connector. In addition, compared with a case of using the alloy pipe as the outer pipe, the nylon pipe is used as the outer pipe, to implement better elasticity (unlikely to permanently deform after interference) and lower costs. In addition, when the inner pipe is the rubber pipe or another pipe body that can be prepared by injection molding, the nylon pipe is used as the outer pipe, which is easy to be prepared by injection molding together with the inner pipe, so that adhesion of the outer pipe and the inner pipe can be better, and the outer pipe is unlikely to be separated from the inner pipe in actual use, thereby reducing a failure risk of the first connection pipe.

In some embodiments, the sealing section includes a third pipe section and an elastic layer; the third pipe section is connected with the connecting section; and the elastic layer is fitted with an inner peripheral wall of the third pipe section. The sealing section uses the structure provided in this embodiment, and therefore, has a simple structure and is easy to assemble.

In some embodiments, the third pipe section and the connecting section are rigid pipe sections respectively. Rigid pipe sections are used as the third pipe section and the connecting section respectively, which can reduce a deformation risk of the third pipe section and the connecting section under the external force during use, thereby further stabilizing a flow state of the liquid in the first connection pipe to some extent.

In some embodiments, the third pipe section and the connecting section are an integrally formed structure. The third pipe section and the connecting section are integrally formed structures, which can stabilize a connection therebetween.

In some embodiments, the first connection pipe includes a main pipe and an annular member, and the annular member is sleeved in the main pipe, where a length of the annular member is less than that of the main pipe in an axial direction of the main pipe, a portion, extending beyond the annular member, of the main pipe forms the sealing section, and a portion, corresponding to the annular member, of the main pipe and the annular member are combined to form the connecting section. The first connection pipe uses the structure provided in this embodiment, and therefore, has a simple structure and is easy to prepare.

In some embodiments, the annular member comes into hermetic contact with the main pipe. The hermetic contact between the annular member and the main pipe, which can reduce, to some extent, a risk that the liquid in the first connection pipe enters the gap between the annular member and the main pipe, thereby reducing a pressure loss when the liquid passes through the first connection pipe.

In some embodiments, an installation structure is protrusively disposed on an outer wall of the connecting section. The installation structure facilitates the assembly of the pipe connection assembly with another structure. For example, the pipe connection assembly can be fixedly connected with a battery cell through the installation structure.

According to a second aspect, this application provides a liquid cooling system, including multiple pipe connection members and multiple liquid cooling plates; at least one pipe connection member is a pipe connection assembly provided in the foregoing embodiments; and the multiple liquid cooling plates are disposed side by side and spaced apart, and two adjacent liquid cooling plates communicate through at least one pipe connection member.

The liquid cooling system provided in this application includes multiple liquid cooling plates and multiple pipe connection members. At least one pipe connection member is a pipe connection assembly provided in the foregoing embodiments. Because the pipe connection assembly provided in the foregoing embodiments can reduce the pressure drop or further increase the pressure drop, the pipe connection members with appropriate dimensions are selected and arrangement of different pipe connection members is reasonably set, which can adjust the pressure drops of different branches in the liquid cooling system to balance flows, so that the fluxes in different liquid cooling plates are the same or equivalent and cooling effects of different zones of the liquid cooling system on the battery cells are equivalent.

In some embodiments, the liquid cooling system further includes a liquid inlet pipe and a liquid discharge pipe; the liquid inlet pipe is configured to communicate with an external liquid supply system, where the liquid cooling plate and the pipe connection member connected with each other form a parallel branch, water inlet ends of multiple parallel branches respectively communicate with the same liquid inlet pipe, and water outlet ends of the multiple parallel branches respectively communicate with the same liquid discharge pipe. The liquid cooling system includes a liquid inlet pipe and a liquid discharge pipe, which facilitates communication between the liquid cooling system and an external liquid supply system.

In some embodiments, at least one pipe connection assembly communicates with a liquid inlet of the liquid cooling plate. Compared with the connection with the liquid outlet of the liquid cooling plate, the pipe connection assembly is connected with the liquid inlet of the liquid cooling plate, thereby facilitating adjustment of the flux in the liquid cooling plate.

In some embodiments, an inner diameter of the connecting section of the pipe connection assembly communicating with the liquid inlet of the liquid cooling plate is greater than or equal to an inner diameter of a first connector; at least one pipe connection member communicating with the liquid inlet of the liquid cooling plate is a first assembly, the first assembly includes a second connector and a second connection pipe communicating with each other, the second connector communicates with the liquid cooling plate, and an inner cavity of the second connection pipe is a constant-section cavity; and the first assembly in all the pipe connection members communicating with the liquid inlets of the liquid cooling plate is located upstream from the pipe connection assembly in a liquid supply direction of the liquid inlet pipe.

Through the solution provided in this embodiment, in the liquid cooling system, in a liquid supply direction of the liquid inlet pipe, resistance applied to a liquid flowing through an upstream pipe connection member can be greater than resistance applied to the liquid flowing through a downstream pipe connection member, so that a flux in the downstream pipe connection member can be equivalent to that in the upstream pipe connection member. The first assembly is made of handy materials, and therefore, the liquid cooling system is easy to assemble and has low manufacturing costs.

In some embodiments, an inner diameter of the connecting section of the pipe connection assembly communicating with the liquid inlet of the liquid cooling plate is less than that of the first connector; at least one pipe connection member communicating with the liquid inlet of the liquid cooling plate is a first assembly, the first assembly includes a second connector and a second connection pipe communicating with each other, the second connector communicates with the liquid cooling plate, and an inner cavity of the second connection pipe is a constant-section cavity; and the first assembly in all the pipe connection members communicating with the liquid inlets of the liquid cooling plate is located downstream from the pipe connection assembly in a liquid supply direction of the liquid inlet pipe.

Through the solution provided in this embodiment, in the liquid cooling system, in a liquid supply direction of the liquid inlet pipe, resistance applied to a liquid flowing through an upstream pipe connection member can be greater than resistance applied to the liquid flowing through a downstream pipe connection member, so that a flux in the downstream pipe connection member can be equivalent to that in the upstream pipe connection member. The first assembly is made of handy materials, and therefore, the liquid cooling system is easy to assemble and has low manufacturing costs.

In some embodiments, at least two pipe connection members are the pipe connection assemblies and at least two pipe connection assemblies communicate with liquid inlets of the liquid cooling plate; all pipe connection assemblies communicating with the liquid inlets of the liquid cooling plate include some pipe connection assemblies whose connecting sections have inner diameters greater than or equal to the inner diameter of the first connector, and include other pipe connection assemblies whose connecting sections have inner diameters less than the inner diameter of the first connector; and all pipe connection members communicating with the liquid inlets of the liquid cooling plate in the liquid supply direction of the liquid inlet pipe include some upstream connecting sections having smaller inner diameters than other downstream connecting sections.

Through the solution provided in this embodiment, in the liquid cooling system, in a liquid supply direction of the liquid inlet pipe, resistance applied to a liquid flowing through an upstream pipe connection member can be greater than resistance applied to the liquid flowing through a downstream pipe connection member, so that a flux in the downstream pipe connection member can be equivalent to that in the upstream pipe connection member.

In some embodiments, pipe connection members respectively communicating with a liquid inlet and a liquid outlet of the same liquid cooling plate have the same structure. In this way, when the liquid cooling system is assembled, it is unlikely to install different pipe connection members at incorrect positions, and assembly efficiency can be improved.

According to a third aspect, this application provides a battery, including multiple battery cells and the liquid cooling system provided in the foregoing embodiments, where at least some battery cells are disposed in a gap between two adjacent liquid cooling plates of the liquid cooling system. The battery provided in this application includes multiple battery cells and the liquid cooling system provided in the foregoing embodiments, and at least some of the multiple battery cells are disposed in the gap between the two adjacent liquid cooling plates of the liquid cooling system, so that cooling effects on battery cells at different positions can be equivalent to some extent.

According to a fourth aspect, this application provides an electric apparatus, including the battery provided in the foregoing embodiments, where the battery is configured to provide electric energy for the electric apparatus. The electric apparatus provided in this application includes the battery provided in the foregoing embodiments, so that the cooling effect on the battery can be good to some extent and service performance of the electric apparatus is stable.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of a vehicle according to some embodiments of this application;
FIG. 2 is a schematic structural diagram of a battery according to some embodiments of this application;
FIG. 3 is a schematic structural diagram of a pipe connection assembly according to some embodiments of this application;
FIG. 4 is a schematic cross-sectional structural diagram in direction A-A in FIG. 3;
FIG. 5 is a schematic cross-sectional structural diagram of a first connection pipe in a pipe connection assembly according to some embodiments of this application;
FIG. 6 is a schematic cross-sectional structural diagram of a pipe connection assembly according to other embodiments of this application;
FIG. 7 is a schematic exploded view of a structure of a pipe connection assembly according to some embodiments of this application;
FIG. 8 is a schematic cross-sectional structural diagram in direction B-B in FIG. 7;
FIG. 9 is a schematic cross-sectional structural diagram of an inner pipe in a pipe connection assembly according to some embodiments of this application;
FIG. 10 is a schematic cross-sectional structural diagram of an outer pipe in a pipe connection assembly according to some embodiments of this application;
FIG. 11 is a schematic cross-sectional structural diagram of a first connection pipe in a pipe connection assembly according to other embodiments of this application;
FIG. 12 is a schematic cross-sectional structural diagram of a first connection pipe in a pipe connection assembly according to other embodiments of this application;
FIG. 13 is a schematic structural diagram of a battery according to some embodiments of this application;
FIG. 14 is a schematic cross-sectional structural diagram of a first assembly in a liquid cooling system according to some embodiments of this application; and
FIG. 15 is a schematic cross-sectional structural diagram of a second connection pipe in a liquid cooling system according to some embodiments of this application.

Reference signs in specific embodiments are described as follows:
1000. vehicle;
100. battery; 200. controller; 300. motor;
10. pipe connection assembly; 20. battery cell; 30. liquid cooling plate; 40. liquid inlet pipe; 50. liquid discharge pipe; 60. pipe connection member; 70. first assembly;
11. first connector; 12. first connection pipe; 71. second connector; 72. second connection pipe;
121. sealing section; 122. connecting section; 123. inner pipe; 124. outer pipe; 125. restraint structure; 126. recessed structure; 127. main pipe; 128. annular member; 129. installation structure;
1211. third pipe section; 1212. elastic layer; 1231. first pipe section; 1232. second pipe section; and
d1. inner diameter of a connecting section; d2. inner diameter of a sealing section; d3. inner diameter of a first connector; d4. distance between an outer wall of an insertion end of the first connector and an inner wall of the outer pipe; d5. inner diameter of the second pipe section; d6. outer diameter of the second pipe section; d7. outer diameter of the first pipe section; d8. inner diameter of the first pipe section; h. height of a portion, protruding from an inner wall of the outer pipe, of the restraint structure; X. liquid supply direction of the liquid inlet pipe; Y. axial direction of the main pipe.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include" and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from the perspective of market development, application of traction batteries is being more extensive. Batteries have been not only used in energy storage power supply systems such as hydraulic power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

Impact of temperatures on the batteries should not be underestimated, irrespective of their shapes. Different temperatures affect safety, service life, functions, performance and the like of the traction battery. If the temperature is excessively high or low, the traction battery may have problems such as thermal runaway, serious decay of the service life, and charge and discharge limitations. Therefore, to keep the traction battery working in a proper temperature range, the temperature of the battery generally needs to be adjusted by using a battery thermal management system in actual use. Battery thermal management systems can be classified into an air cooling system, a liquid cooling system, a heat pipe cooling system, a phase-change cooling system and the like as per different heat transfer media. The liquid cooling system has a better cooling effect than the air cooling system, costs less than the heat pipe cooling system and the phase-change cooling system, and has advantages of both stability and high efficiency, and therefore, the liquid cooling system is widely applied.

In the liquid cooling system, a coolant is used as a heat exchange media, and a liquid pump and a liquid cooling pipe are used to complete flowing of the coolant in the battery system. Liquid cooling systems are classified into a direct contact category and an indirect contact category. Direct contact cooling means that a battery group is directly immersed in a cooling liquid; and indirect contact cooling means that a liquid cooling plate is disposed in the battery group, the liquid cooling plate comes into direct contact with a battery cell in the battery group, and then heat emitted by the battery cell is transferred out by a liquid in the liquid cooling plate through heat exchange.

In a related art, a liquid cooling plate is disposed at each of two sides of a battery module, a plate surface of the liquid cooling plate comes into contact with a side surface of a battery cell in the battery module, two adjacent liquid cooling plates communicate through a connection pipe to form a parallel liquid path with multiple liquid cooling plates connected in parallel, and then the parallel liquid path communicates with an external liquid supply system through a liquid inlet pipe and a liquid discharge pipe. In a use process, the external liquid supply system provides the coolant to the parallel liquid path through the liquid inlet pipe, and then the coolant enters each liquid cooling plate through the liquid inlet pipe and the connection pipe and further flows in the liquid cooling plate to transfer out heat emitted by the battery cell, thereby cooling the battery cell.

However, in the related art, inner diameters of different zones of a main portion (except an inlet and an outlet) of the connection pipe are the same. When communication between the connection pipe and the liquid cooling plate is implemented, generally, the connector is connected with the liquid cooling plate first, and then the connector is connected with the connection pipe; or the connector is connected with the connection pipe first, and then the connector is connected with the liquid cooling plate, so that the liquid cooling plate communicates with the connection pipe. An inner diameter of the connector is less than that of the connection pipe, and the connector needs to be inserted into the connection pipe when in use, to implement communication between the connector and the connection pipe. However, after the connector is inserted into the connection pipe, a bulge structure is formed between an inner wall of the connector and an inner wall of the connection pipe, and in this way, there is a reducing zone in a channel in which the liquid flows inside the pipe connection assembly formed by combining the connector and the connection pipe, and a flow state of the liquid changes from a laminar flow to a turbulent flow when the liquid passes through the pipe connection assembly, resulting in a fluid pressure change, which is uncontrollable. This cannot meet use needs in some special situations. The special situation may be to reduce pressure drop or further increase the pressure drop.

To alleviate the foregoing problems, an embodiment of this application provides a pipe connection assembly. A first connection pipe in the pipe connection assembly includes a sealing section and a connecting section communicating with each other, and an inner diameter of the connecting section is less than that of the sealing section, which can reduce a pressure loss of the liquid and pressure drop to some extent or further increase the pressure loss of the liquid and pressure drop to some extent compared with a condition that the inner diameter of the connecting section is greater than or equal to that of the sealing section, thereby meeting use needs in some special situations and expanding a scope of application of the pipe connection assembly. The pipe connection assembly provided in this embodiment of this application can be used for both communication of an ordinary pipe and communication of a pipe with a special requirement. For example, in the liquid cooling system, the pipe connection assembly is used together with an ordinary pipe connection assembly, to implement the same flux in different liquid cooling plates and improve a heat dissipation effect.

The battery cell disclosed in the embodiments of this application can be used for electric apparatuses that use a battery as a power supply or various energy storage systems that use a battery as an energy storage element. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

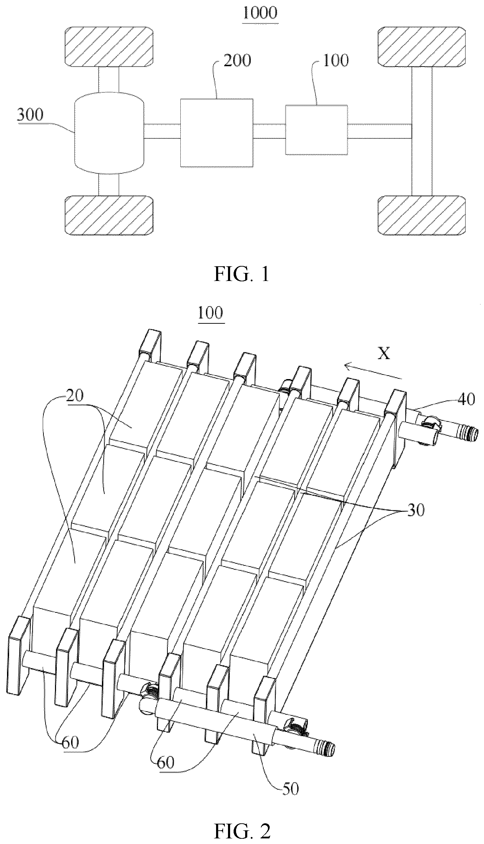

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power supply for the vehicle 1000 but also a driving power supply for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application. The battery 100 includes a battery cell 20 and a liquid cooling system. If multiple battery cells 20 are provided, the multiple battery cells 20 may be connected in series, parallel, or series-parallel, where being connected in series-parallel means a combination of series and parallel connections of the multiple battery cells 20. The battery 100 may further include other structures. For example, the battery 100 may further includes a busbar configured to implement electrical connection between the multiple battery cells 20. Each battery cell 20 may be a secondary battery or a primary battery, or may be a lithium-sulfur battery, a sodium-ion battery, or a magnesium-ion battery, without being limited thereto. The battery cell 20 may be cylindrical, flat, or cuboid, or in other shapes.

Generally, multiple battery cells 20 are disposed in the battery 100, the multiple battery cells 20 are arranged in a two-dimensional array, and there is a gap between two adjacent columns.

The liquid cooling system includes multiple liquid cooling plates 30 and multiple pipe connection members 60. The multiple liquid cooling plates 30 are disposed side by side and spaced apart. Two adjacent liquid cooling plates 30 communicate through one pipe connection member 60. At least one pipe connection member 60 is a pipe connection assembly provided in this embodiment of this application.

During use, one liquid cooling plate 30 is placed on each of two sides of each column of battery cells 20, and the liquid cooling plate 30 is in thermal contact with surfaces of the battery cells 20. Then two adjacent liquid cooling plates 30 communicate through the pipe connection assembly. Finally, all the liquid cooling plates 30 and pipe connection members 60 are combined to form a combined liquid path, to communicate with the liquid inlet pipe 40 and the liquid discharge pipe 50.

As described below, taking application of the pipe connection assembly to the battery and use of the pipe connection assembly along with the liquid cooling plate as an example, the pipe connection assembly provided in this application is illustrated.

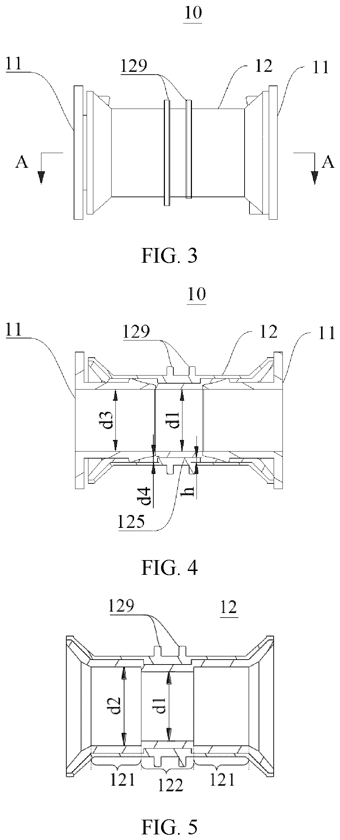

According to some embodiments of this application, referring to FIG. 3 to FIG. 5, an embodiment of this application provides a pipe connection assembly 10. The pipe connection assembly 10 includes a first connector 11 and a first connection pipe 12. The first connector 11 is configured to communicate with the liquid cooling plate. The first connection pipe 12 includes a sealing section 121 and a connecting section 122 communicating with each other. The sealing section 121 hermetically communicates with the first connector 11. An inner diameter d1 of the connecting section 122 is less than an inner diameter d2 of the sealing section 121.

The first connector 11 is configured to be connected with the liquid cooling plate, and can be an externally threaded end-connected water pipe connector, a ferrule-like water pipe connector, a self-fixing water pipe connector, or the like, which can be specifically flexibly selected based on a use need. The first connector 11 in this embodiment can directly communicate with the liquid cooling plate, or can communicate with the liquid cooling plate through another connection structure such as any one or more connection members in a current collector, a pipe, and the like, which can be specifically flexibly selected based on a use need.

The first connection pipe 12 can be a pipe member respectively connected with the two first connectors 11 to implement communication between the two first connectors 11. As shown in FIG. 3, the first connection pipe 12 can alternatively be a pipe member that has one end communicating with the liquid cooling plate through the first connector 11 and that has another end directly communicating with another liquid cooling plate; or the first connection pipe 12 can alternatively be a pipe member that has one end communicating with the liquid cooling plate through the first connector 11 and that has another end communicating with the liquid cooling plate through another pipe member or connection structure, which can be specifically flexibly selected based on a use need.

The first connection pipe 12 can be one pipe body or a combined structure formed by combining multiple pipe members. When the first connection pipe 12 is an integrally formed structure, the sealing section 121 and the connecting section 122 are portions of the first connection pipe 12 respectively. When the first connection pipe 12 is the combined structure formed by combining multiple pipe members, the sealing section 121 and the connecting section 122 each may be one pipe member or two portions of the same pipe member.

Generally, the sealing section 121 is a pipe section formed by extending an end surface of the first connection pipe 12 inward by a certain distance along a length direction of the pipe, and can hermetically communicate with the first connector 11 through interference fit, or can hermetically communicate with the first connector 11 in conjunction with a sealant, a sealing tape and the like on the basis of insertion, which can be specifically selected based on a use need.

Generally, the connecting section 122 is directly connected with the sealing section 121, or there may be a certain gap between the connecting section 122 and the sealing section 121, which can be specifically flexibly selected based on a use need. The connecting section 122 can be a portion at the middle zone of the first connection pipe 12, or a pipe section formed by extending another end surface of the first connection pipe 12 inward by a certain distance along a length direction of the pipe, which can be specifically set based on a use need. If two first connectors 11 are disposed in the pipe connection assembly 10, the two first connectors 11 are respectively connected with the first connection pipe 12, and the first connection pipe 12 is provided with two sealing sections 121, the portion at the middle zone of the first connection pipe 12 is the connecting section 122. If only one first connector 11 is disposed in the pipe connection assembly 10, a first end of the first connection pipe 12 communicates with a liquid cooling plate through the first connector 11, and an inner diameter of the second end is less than that of the first end, a second end of the first connection pipe 12 is the connecting section 122.

The inner diameter d1 of the connecting section 122 refers to a diameter of a cylindrical structure enclosed by the inner wall of the connecting section 122, and the inner diameter d2 of the sealing section 121 refers to a diameter of a cylindrical structure enclosed by the inner wall of the sealing section 121.

It should be noted that when at least one of the sealing section 121 and the connecting section 122 is a structure with a variable cross section, that is, inner diameters of longitudinal cross sections of at least one of the sealing section 121 and the connecting section 122 at different positions are not completely consistent, the inner diameter d1 of the connecting section 122 is less than the inner diameter d2 of the sealing section 121, which means that the maximum inner diameter of the connecting section 122 is less than the minimum inner diameter of the sealing section 121. The maximum inner diameter of the connecting section 122 refers to a diameter with the maximum value in all diameters corresponding to inner contours of longitudinal cross sections at all positions in the connecting section 122. The minimum inner diameter of the sealing section 121 refers to a diameter with the minimum value in all diameters corresponding to inner contours of longitudinal cross sections at all positions in the sealing section 121.

Referring to FIG. 4 to FIG. 6, a working principle of the pipe connection assembly 10 provided in this embodiment of this application is as follows:

Because the inner diameter d1 of the connecting section 122 is less than the inner diameter d2 of the sealing section 121 in the first connection pipe 12 of the pipe connection assembly 10 provided in this embodiment of this application, when the inner diameter d1 of the connecting section 122 is less than the inner diameter d2 of the sealing section 121 but greater than or equal to the inner diameter d3 of the first connector 11, as shown in FIG. 4 and FIG. 5, the inner diameter d3 of the first connector 11 can be closer to the inner diameter d1 of the connecting section 122, which is unlike a solution where inner diameters of different zones of the first connection pipe 12 are unchanged in the related art, so that a flow state of the liquid is unlikely to change from the laminar flow to the turbulent flow when the liquid flows from the first connector 11 to the connecting section 122. This can reduce the energy loss and pressure drop to some extent when the liquid passes through the pipe connection assembly 10.

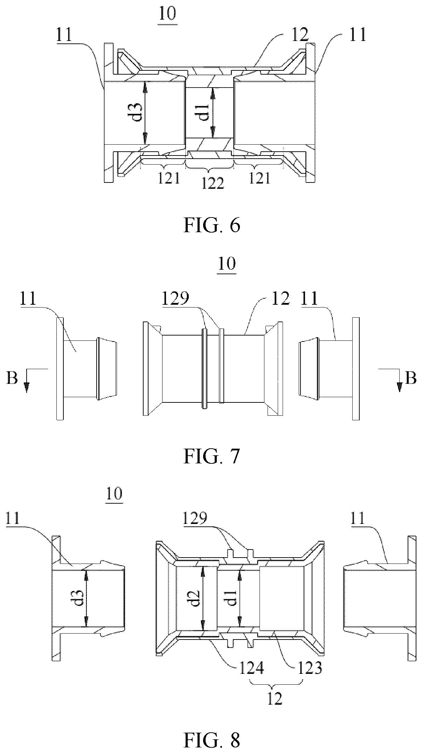

When the inner diameter d1 of the connecting section 122 is less than the inner diameter d3 of the first connector 11, as shown in FIG. 5 and FIG. 6, flow space of the liquid can be reduced after the liquid flows from the first connector 11 to the connecting section 122, and friction between particles is intensified, which is unlike a solution where inner diameters of different zones of the first connection pipe 12 are unchanged in the related art, thereby further increasing the pressure loss of the liquid and improving the pressure drop.

It can be seen that the pipe connection assembly 10 provided in this embodiment of this application includes a first connector 11 and a first connection pipe 12, the first connection pipe 12 includes a sealing section 121 and a connecting section 122 communicating with each other, and the inner diameter d1 of the connecting section 122 is less than the inner diameter d2 of the sealing section 121, which is different from a condition that the inner diameter d1 of the connecting section 122 is greater than or equal to the inner diameter d2 of the sealing section 121; and the inner diameter d1 of the connecting section 122 is set to be different from an inner diameter of the first connector 11 connected with the sealing section 121, so that the pressure loss of the liquid and pressure drop can be reduced to some extent when the liquid flows from the first connector 11 to the first connection pipe 12, or the pressure loss of the liquid and pressure drop can be further increased to some extent when the liquid flows from the first connector 11 to the first connection pipe 12, thereby meeting use needs in some special situations and expanding a scope of application of the pipe connection assembly. The pipe connection assembly 10 provided in this embodiment of this application can be used for both communication of an ordinary pipe and communication of a pipe with a special requirement. For example, in a liquid cooling system, the change in the pressure drop is controlled, so that the pipe connection assembly 10 in this embodiment of this application is used together with an ordinary pipe connection assembly, to implement the same flux in different liquid cooling plates and improve a heat dissipation effect.

In some embodiments, as shown in FIG. 4 and FIG. 5, the inner diameter d1 of the connecting section 122 is greater than or equal to the inner diameter d3 of the first connector 11. The inner diameter d3 of the first connector 11 refers to a diameter of the cylindrical structure enclosed by the inner wall of the first connector 11.

The inner diameter d1 of the connecting section 122 is equal to the inner diameter d3 of the first connector 11, so that a flow state of the liquid does not change sharply after the liquid flows from the first connector 11 to the connecting section 122, which can reduce a pressure loss of the liquid and pressure drop to some extent, to be applicable to a liquid cooling system requiring balanced fluxes. The inner diameter d1 of the connecting section 122 is greater than the inner diameter d3 of the first connector 11, so that flow resistance can be controlled to some extent; and for example, a value of the inner diameter d1 of the connecting section 122 is controlled to control the value of the flow resistance, so that flow resistance can be controlled when the liquid flows from the first connector 11 to the connecting section 122 and the pressure drop can be controlled, to be applicable to water cooling systems requiring different pressure drops, thereby improving performance of the liquid cooling system using the pipe connection assembly provided in this embodiment. After testing, in some embodiments, the inner diameter d1 of the connecting section 122 is equal to the inner diameter d3 of the first connector 11, which can reduce the pressure loss by about 10% compared with the ordinary pipe connection assembly 10.

In some embodiments, as shown in FIG. 5 and FIG. 6, the inner diameter d1 of the connecting section 122 is less than the inner diameter d3 of the first connector 11. In this way, an area of a longitudinal cross section of the connecting section 122 can be further reduced, so that the flow space becomes smaller when the liquid flows from the first connector 11 to the connecting section 122; and the friction between particles is intensified, which can further increase the pressure loss of the liquid and the pressure drop compared with a condition that the inner diameter d1 of the connecting section 122 is greater than or equal to the inner diameter d2 of the sealing section 121.

In some embodiments, as shown in FIG. 4, the first connector 11 is hermetically inserted into the sealing section 121. Hermetic insertion means that the first connector 11 can hermetically communicate with the sealing section 121 in an insertion manner. The first connector 11 is inserted into the sealing section 121 in a hermetic insertion manner, so that the first connector 11 and the sealing section 121 have a simple connection structure and are easy to assemble.

In some embodiments, as shown in FIG. 4 and FIG. 5, two sealing sections 121 are disposed. The two sealing sections 121 are respectively disposed at two ends of the connecting section 122. The first connector 11 is provided in a quantity of two and the two first connectors 11 are inserted into the two sealing sections 121 in one-to-one correspondence.

Structures of the two first connectors 11 in this embodiment may be the same or different. When the structures of the two first connectors 11 are different, structures of the two sealing sections 121 may be the same or different based on use needs. If the two sealing sections 121 with the same structure can still be hermetically connected with the two first connectors 11 even though the structures of the two first connectors 11 are different, the structures of the two sealing sections 121 can be the same. If only two sealing sections 121 with different structures can be respectively hermetically connected with the two first connectors 11, the structures of the two sealing sections 121 need to be designed to be different.

The structure provided in this embodiment facilitates respective communication between the same first connection pipe 12 and two liquid cooling plates 30, which can improve assembly efficiency.

In some embodiments, as shown in FIG. 4, inner diameters d3 of the two first connectors 11 are the same. In this way, with the structure provided in this embodiment, provided that the inner diameter d1 of the connecting section 122 is the same as an inner diameter d3 of any first connector 11, an inner cavity of the pipe connection assembly 10 formed by combining two first connectors 11 and the first connection pipe 12 can be a constant-section cavity or similar to the constant-section cavity, which facilitates design, processing and assembly of all components in the pipe connection assembly 10.

In some embodiments, the first connector 11 is sealed by the sealing section 121 with interference. Interference means that the outer diameter of the first connector 11 is greater than or equal to the inner diameter d2 of the sealing section 121, and there is no gap between the first connector 11 and the sealing section 121 after insertion. The first connector 11 and the sealing section 121 are sealed through interference fit, which implements a simple sealing manner and facilitates assembly.

In some embodiments, as shown in FIG. 7 to FIG. 9, the first connection pipe 12 includes an inner pipe 123 and an outer pipe 124 fitted over the inner pipe 123. The inner pipe 123 has elasticity, and the inner pipe 123 includes a first pipe section 1231 and a second pipe section 1232 communicating with each other, and an inner diameter d5 of the second pipe section 1232 is less than an inner diameter d8 of the first pipe section 1231. A portion, corresponding to the second pipe section 1232, of the outer pipe 124 and the second pipe section 1232 are combined to form the connecting section 122, and a portion, corresponding to the first pipe section 1231, of the outer pipe 124 and the first pipe section 1231 are combined to form the sealing section 121. In this way, the inner diameter d5 of the second pipe section 1232 is the inner diameter d1 of the connecting section 122, and the inner diameter d8 of the first pipe section 1231 is the inner diameter d2 of the sealing section 121, that is, d5 = d1 and d8 = d2.

Each of the inner pipe 123 and the outer pipe 124 can be a single pipe body or can be formed by connecting multiple pipe bodies, and the structure and material of the inner pipe 123 can be the same as or different from the structure and material of the outer pipe 124, which can be specifically flexibly selected based on a use need.

The elasticity of the inner pipe 123 means that the inner pipe 123 can recover its original size and shape or can basically recover its original size and shape after deformation. Basically recovering the original size and shape means that the inner pipe 123 has slight changes in size and shape after deformation, but the slight changes do not affect normal use.

Generally, the first pipe section 1231 and the second pipe section 1232 directly communicate, and in some cases, the first pipe section 1231 and the second pipe section 1232 can also communicate through a reducing pipe section, which can be specifically flexibly selected based on a use need.

The portion, corresponding to the second pipe section 1232, of the outer pipe 124 refers to a portion, overlapped with the second pipe section 1232, of the outer pipe 124. The portion, corresponding to the first pipe section 1231, of the outer pipe 124 refers to the portion, overlapped with the first pipe section 1231, of the outer pipe 124.

The first connection pipe 12 uses the structure provided in this embodiment, which can entitle different zones to different functions and facilitate assembly. When the first connector 11 is inserted into the sealing section 121 and connected with the first connection pipe 12, that is, the first connector 11 is inserted into the first pipe section 1231 of the inner pipe 123, the inner pipe 123 is entitled to the elasticity, so that sealing of the first connector 11 and the inner pipe 123 can be implemented through interference fit, thereby facilitating communication between the first connector 11 and the first connection pipe 12.

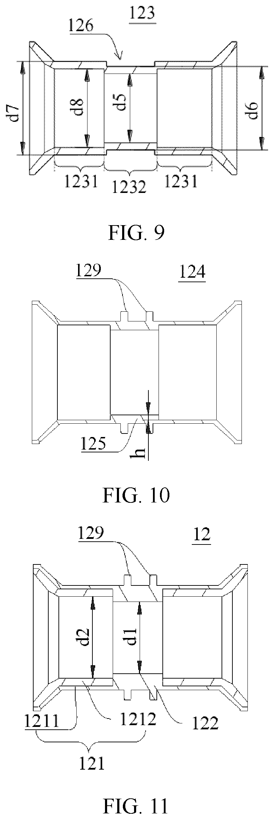

In some embodiments, as shown in FIG. 4 and FIG. 10, a restraint structure 125 is protrusively disposed at a portion, corresponding to the second pipe section 1232, of an inner wall of the outer pipe 124. The restraint structure 125 and the second pipe section 1232 are combined to form a combined restraint structure. The combined restraint structure restrains an insertion depth of the first connector 11 by abutting against the first connector 11. The combined restraint structure abuts against the first connector 11, which indicates that an end surface of the first connector 11 abuts against a side surface of the combined restraint structure after the first connector 11 is inserted into the sealing section 121.

The restraint structure 125 may be a block, a triangular structure, a semicircular structure and the like protrusively disposed on the inner wall of the outer pipe 124.

The first connector 11 is generally inserted into the first pipe section 1231 through interference insertion, that is, the outer diameter of the first connector 11 is generally greater than the inner diameter of the first pipe section 1231, the inner diameter of the second pipe section 1232 is less than the inner diameter of the first pipe section 1231, and therefore, the inner diameter of the second pipe section 1232 is necessarily less than that of the first connector 11. In this way, when the first connector 11 is inserted into the first connection pipe 12, a side wall of the second pipe section 1232 abuts against an end portion of the first connector 11, to exert a certain obstruction effect on the first connector 11 during the insertion. However, the second pipe section 1232 is generally an elastic structure, and when an insertion force is great, the first connector 11 still presses against the second pipe section 1232 and then is inserted into the second pipe section 1232.

However, in this embodiment, the restraint structure 125 is disposed at the portion, corresponding to the second pipe section 1232, of an inner wall of the outer pipe 124. When the restraint structure 125 is generally made of a material with hardness greater than that of the second pipe section 1232, hardness of the portion, corresponding to the second pipe section 1232, in the first connection pipe 12 can be increased, and therefore, the combined restraint structure formed by combining the restraint structure 125 and the second pipe section 1232 has greater hardness, a thickness of the second pipe section 1232 can be smaller and deformable space is smaller, so that resistance applied to the first connector 11 when being inserted into the connecting section 122 can be increased to some extent. In this way, the insertion depth of the first connector 11 into the first connection pipe 12 can be limited to some extent, so that the first connector 11 can be confined in the sealing section 121, thereby reducing an adverse effect caused by an excessively great insertion depth of the first connector 11.

For example, when the pipe connection assembly 10 is provided with two first connectors 11, if one first connector 11 is inserted excessively deep, a length of a connection portion of the other first connector 11 and the first connection pipe 12 (that is, a length of an effective sealing portion of the other first connector 11 and the sealing section 121) cannot meet a preset requirement, which affects a sealing effect on the other first connector 11 and the first connection pipe 12. It can be seen that the first connector 11 is confined in the sealing section 121, and therefore, when the pipe connection assembly 10 has one or two first connectors 11, a length of a sealing portion of each first connector 11 and the first connection pipe 12 can meet a preset length.

In addition, the first connector 11 is installed in such a way that the first connector 11 abuts against the combined restraint structure, insertion depths of the first connector 11 in different pipe connection assemblies can be consistent, thereby implementing standardized assembly.

In some embodiments, as shown in FIG. 4 and FIG. 10, a height h of a portion, protruding from the inner wall of the outer pipe, of the restraint structure is greater than or equal to a distance d4 between an outer wall of an insertion end of the first connector and the inner wall of the outer pipe.

The height h of the portion, protruding from the inner wall of the outer pipe, of the restraint structure refers to a vertical distance between the surface, farther away from the inner wall of the outer pipe 124, of the restraint structure 125 and the inner wall of the outer pipe.

An insertion end of the first connector 11 is an end portion, inserted into the connection pipe 12, in the first connector 11. The distance d4 between the outer wall of the insertion end of the first connector 11 and the inner wall of the outer pipe refers to a vertical distance between the outer wall of the insertion end of the first connector 11 and the inner wall of the outer pipe 124.

The restraint structure 125 uses the structure provided in this embodiment, which exerts a good restraint effect on the insertion depth of the first connector 11 into the first connection pipe 12, so that restraint reliability of the restraint structure 125 can be higher.

In some embodiments, as shown in FIG. 10, the restraint structure 125 is an annular structure wound on the inner wall of the outer pipe. In this embodiment, there may be one or more annular structures, and when there is one annular structure, the annular structure may be a cylindrical structure, and when there are multiple annular structures, the multiple annular structures may be disposed at intervals.

The restraint structure 125 uses the annular structure, the first connector 11 can come into contact with different zones of the first connector 11 when being inserted into the first connection pipe 12, and compared with a case of disposing the restraint structure 125 only on one side of the outer pipe 124, a risk of an oblique insertion direction of the first connector 11 caused due to existence of the restraint structure 125 can be reduced to some extent, and the restraint reliability is improved.

In some embodiments, the inner diameter of the annular structure is less than or equal to the outer diameter of the first connector 11.

The inner diameter of the annular structure refers to the diameter of the cylindrical structure enclosed by the inner wall of the annular structure. The outer diameter of the first connector 11 refers to a diameter of a cylindrical structure or a conical structure enclosed by the outer wall of the first connector 11. Because the outer wall of the first connector 11 can generally be a non-planar structure, the inner diameter of the annular structure is less than or equal to the outer diameter of the first connector 11, which means that the minimum value of inner diameters corresponding to different positions in the annular structure is less than or equal to the maximum value of outer diameters corresponding to different positions on the outer wall of the first connector 11.

The inner diameter of the annular structure is less than or equal to the outer diameter of the first connector 11, which can further reduce a risk of entering the connecting section 122 by the first connector 11 and reduce an adverse effect caused due to an excessive insertion depth of the first connector 11 compared with a condition that the inner diameter of the annular structure is greater than the outer diameter of the first connector 11.

In some embodiments, as shown in FIG. 8 to FIG. 10, a recessed structure 126 is formed in a portion, corresponding to the restraint structure 125, of an outer wall of the inner pipe 123. The recessed structure 126 is configured to accommodate the restraint structure 125.

The portion, corresponding to the restraint structure 125, of the outer wall of the inner pipe 123 refers to a portion, corresponding to the restraint structure 125, of the outer wall of the inner pipe 123, that is, a portion, coming into contact with the restraint structure 125, of the outer wall of the inner pipe 123.

A shape of the recessed structure 126 may be the same as or similar to a shape of the restraint structure 125, and dimensions of the recessed structure 126 in all directions may be slightly greater than or equal to dimensions of the restraint structure 125 in corresponding directions, provided that the restraint structure 125 can be inserted into the recessed structure 126.

The recessed structure 126 is disposed, so that an outer wall contour of the inner pipe 123 can fit an inner wall contour of the outer pipe 124, to reduce, to some extent, a deformation risk of the inner pipe 123 when squeezed due to the existence of the restraint structure 125 after the inner pipe 123 and the outer pipe 124 are combined, thereby improving structural stability of the inner pipe 123 and assembly efficiency of the inner pipe 123 and the outer pipe 124. Fitting of contours means that surfaces, coming into contact with each other, of the inner pipe 123 and the outer pipe 124, namely different zones on the outer wall of the inner pipe 123 and the inner wall of the outer pipe 124, can be fitted together when the inner pipe 123 is sleeved by the outer pipe 124.

In some embodiments, as shown in FIG. 9, the outer diameter d6 of the second pipe section 1232 is less than the outer diameter d7 of the first pipe section 1231. The recessed structure 126 is enclosed by an outer wall of the second pipe section 1232 and a connection surface between the second pipe section 1232 and the first pipe section 1231.

The outer diameter d7 of the first pipe section 1231 refers to a diameter of a cylindrical structure enclosed by the outer wall of the first pipe section 1231. The outer diameter d6 of the second pipe section 1232 refers to a diameter of a cylindrical structure enclosed by the outer wall of the second pipe section 1232.

The recessed structure 126 is enclosed by the outer wall of the second pipe section 1232 and the connection surface between the second pipe section 1232 and the first pipe section 1231, and can be directly formed when the inner pipe 123 is prepared without secondary processing, which can improve processing efficiency.

In some embodiments, the inner pipe 123 is an integral piece; and/or the outer pipe 124 is an integral piece.

The integral piece refers to a member prepared by connecting, into a whole, portions prepared through one or more processes. The pipe connection assembly 10 provided in this embodiment includes the following solutions:
solution 1: the inner pipe 123 is an integral piece;
solution 2: the outer pipe 124 is an integral piece; and
solution 3: the inner pipe 123 is an integral piece and the outer pipe 124 is an integral piece.

When the inner pipe 123 is the integral piece, the inner pipe 123 has a stable structure and is easy to prepare. When the outer pipe 124 is the integral piece, the outer pipe 124 has a stable structure and is easy to prepare.

In some embodiments, the inner pipe 123 is a flexible pipe; and/or the outer pipe 124 is a rigid pipe.

The pipe connection assembly 10 provided in this embodiment includes the following solutions:
solution 1: the inner pipe 123 is a flexible pipe;
solution 2: the outer pipe 124 is a rigid pipe; and
solution 3: the inner pipe 123 is a flexible pipe and the outer pipe 124 is a rigid pipe.

In the foregoing solutions, the flexible pipe is a pipe body that is easy to deform under action of an external force and that can recover its original state or cannot completely recover its shape after the external force is withdrawn, provided that the flexible pipe can meet the use need. The flexible pipe can be a rubber pipe, a plastic pipe, or the like. In the foregoing solutions, the rigid pipe is a pipe body that is uneasy to deform under action of an external force, and can be a metal pipe, a plastic pipe, or the like.

When the inner pipe 123 is the flexible pipe, it is easy for the inner pipe 123 to be interference fitted with the first connector 11, to implement a hermetic connection therebetween. When the outer pipe 124 is the rigid pipe, the inner pipe 123 is unlikely to deform after the outer wall of the first connection pipe 12 is subjected to an external force, and therefore, the inner wall of the first connection pipe 12 is unlikely to deform, and a flow rate, a flux and the like of the liquid in the first connection pipe 12 are unlikely to change, thereby reducing the pressure drop to some extent when the liquid passes through the pipe connection assembly 10.

In some embodiments, the inner pipe 123 is the rubber pipe. When the inner pipe 123 is the rubber pipe, the inner pipe 123 has good elastic performance, is made of handy materials and has low costs.

In some embodiments, the outer pipe 124 is an alloy pipe or a nylon pipe.

The pipe connection assembly 10 provided in this embodiment includes the following solutions:
solution 1: the outer pipe 124 is the alloy pipe; and
solution 2: the outer pipe 124 is the nylon pipe.

When the outer pipe 124 is the alloy pipe, P12 alloy pipe may be used, or an aluminum alloy pipe, a stainless steel pipe, or the like can be used, which can be specifically flexibly selected based on a use need, so that the outer pipe 124 can be unlikely to deform and has good mechanical performance, and an effect on the shape of the inner pipe 123 can be avoided when the outer pipe 124 is subjected to an external force, thereby meeting the use need. When the outer pipe 124 is the nylon pipe, the outer pipe 124 is harder than the inner pipe 123. When the first connector is inserted into the first connection pipe with interference, the outer pipe 124 applies a relatively great holding force on the inner pipe 123 and the first connector. In addition, compared with a case of using the alloy pipe as the outer pipe 124, the nylon pipe is used as the outer pipe 124, to implement better elasticity (unlikely to permanently deform after interference) and lower costs. In addition, when the inner pipe 123 is the rubber pipe or another pipe body that can be prepared by injection molding, the nylon pipe is used as the outer pipe 124, which is easy to be prepared by injection molding together with the inner pipe 123, so that adhesion of the outer pipe 124 and the inner pipe 123 can be better, and the outer pipe 124 is unlikely to be separated from the inner pipe 123 in actual use, thereby reducing a failure risk of the first connection pipe.

In some embodiments, as shown in FIG. 11, the sealing section 121 includes a third pipe section 1211 and an elastic layer 1212. The third pipe section 1211 is connected with the connecting section 122, and the elastic layer 1212 is fitted with an inner peripheral wall of the third pipe section 1211.

The third pipe section 1211 is a portion of the first connection pipe 12. The elastic layer 1212 can be an elastic coating, an elastic adhesive film, or the like attached to the inner peripheral wall of the third pipe section 1211, or a rubber sleeve, a composite material sleeve, or the like fitted with the third pipe section 1211 in a sleeving manner, which can be specifically flexibly selected based on a use need.

The sealing section 121 uses the structure provided in this embodiment, and therefore, has a simple structure and is easy to assemble.

In some embodiments, the third pipe section 1211 and the connecting section 122 are rigid pipe sections respectively.

The rigid pipe section can be a pipe section unlikely to deform under an external force, for example, a metal pipe or a plastic pipe.

Rigid pipe sections are used as the third pipe section 1211 and the connecting section 122 respectively, which can reduce a deformation risk of the third pipe section 1211 and the connecting section 122 under the external force during use, thereby further stabilizing a flow state of the liquid in the first connection pipe 12 to some extent.

In some embodiments, the third pipe section 1211 and the connecting section 122 are integrally formed structures.

The third pipe section 1211 and the connecting section 122 are integrally formed structures, which means that the third pipe section 1211 and the connecting section 122 can be two portions of the same pipe body.

The third pipe section 1211 and the connecting section 122 are integrally formed structures, which can stabilize a connection therebetween.

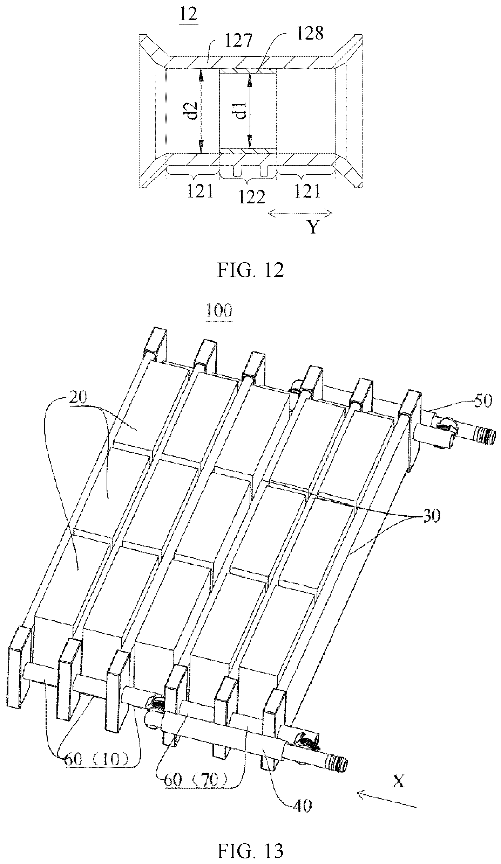

In some embodiments, as shown in FIG. 12, the first connection pipe 12 includes a main pipe 127 and an annular member 128 sleeved in the main pipe 127.

A length of the annular member 128 is less than that of the main pipe 127 in an axial direction Y of the main pipe 127. A portion, extending beyond the annular member 128, of the main pipe 127 forms the sealing section 121. A portion, corresponding to the annular member 128, of the main pipe 127 and the annular member 128 are combined to form the connecting section 122. In this case, an inner diameter of the portion, extending beyond the annular member, of the main pipe is the inner diameter d2 of the sealing section 121, and the inner diameter of the annular member is the inner diameter d1 of the connecting section 122.

The annular member 128 can be a pipe body, a block body with a certain thickness, or another structure, which can be specifically flexibly selected based on a use need. The materials of the annular member 128 and the main pipe 127 may be the same or different. The annular member 128 can be located at the middle or end portion of the main pipe 127, which can be specifically flexibly set based on a use need.

One end of the main pipe 127 may extend beyond the annular member 128, that is, the annular member 128 is located at the end portion of the main pipe 127. In this case, the first connection pipe 12 forms a sealing section 121. Both ends of the main pipe 127 can also extend beyond the annular member 128, that is, the annular member 128 is located at the middle of the main pipe 127, and in this case, two sealing sections 121 are formed.

The first connection pipe 12 uses the structure provided in this embodiment, and therefore, has a simple structure and is easy to prepare.

In some embodiments, the annular member 128 comes into hermetic contact with the main pipe 127. The hermetic contact between the annular member 128 and the main pipe 127 means that the outer peripheral wall of the annular member 128 and the inner peripheral wall of the main pipe 127 come into contact with each other and there is no gap therebetween. The hermetic contact between the annular member 128 and the main pipe 127, which can reduce, to some extent, a risk that the liquid in the first connection pipe 12 enters the gap between the annular member 128 and the main pipe 127, thereby reducing a pressure loss when the liquid passes through the first connection pipe 12.

In some embodiments, as shown in FIG. 3, an installation structure 129 is protrusively disposed on an outer wall of the connecting section 122. The installation structure can be a bump, a protrusive arris, a protrusive plate, or the like, and can be specifically determined based on a specific structure and a use need of the pipe connection assembly 10. The installation structure 129 facilitates the assembly of the pipe connection assembly 10 with another structure. For example, the pipe connection assembly 10 can be fixedly connected with a battery cell through the installation structure 129.

According to some embodiments of this application, as shown in FIG. 3 to FIG. 10, this application also provides a pipe connection assembly 10. The pipe connection assembly 10 includes a first connector 11 and a first connection pipe 12. The first connector 11 is configured to communicate with the liquid cooling plate. The first connection pipe 12 includes a sealing section 121 and a connecting section 122 communicating with each other. The sealing section 121 hermetically communicates with the first connector 11. The sealing section 121 is provided in a quantity of two and the two sealing sections 121 are respectively disposed at two ends of the connecting section 122. In addition, the first connector 11 is provided in a quantity of two, and the inner diameters d3 of the two first connectors 11 are the same. The two first connectors 11 are inserted into the two sealing sections 121 in one-to-one correspondence, and are interference fitted with the sealing sections 121 to hermetically communicate with the first connection pipe 12.

An installation structure 129 is protrusively disposed on an outer wall of the connecting section 122. An inner diameter d1 of the connecting section 122 is less than an inner diameter d2 of the sealing section 121. In some embodiments, the inner diameter d1 of the connecting section 122 is greater than or equal to the inner diameter d3 of the first connector 11. In other embodiments, the inner diameter d1 of the connecting section 122 is less than the inner diameter d3 of the first connector 11.

The first connection pipe 12 includes an inner pipe 123 and an outer pipe 124. The inner pipe 123 is an integral rubber pipe with elasticity. The inner pipe 123 includes a first pipe section 1231 and a second pipe section 1232 communicating with each other, and an inner diameter d5 of the second pipe section 1232 is less than an inner diameter d8 of the first pipe section 1231.

The outer pipe 124 is an integral alloy pipe. The outer pipe 124 is fitted over the inner pipe 123, and a restraint structure 125 is protrusively disposed at a portion, corresponding to the annular bulge, of an inner wall of the outer pipe 124. The restraint structure 125 is an annular structure. The inner diameter of the annular structure is less than or equal to the outer diameter of the first connector 11.

A recessed structure 126 is formed in a portion, corresponding to the restraint structure 125, of an outer wall of the inner pipe 123. The recessed structure 126 is configured to accommodate the restraint structure 125.

To facilitate insertion of the first connector 11, in general, a guide structure is formed at the end portion of the connection pipe 12, and the guide structure is generally a trumpet-shaped annular structure.

The pipe connection assembly 10 provided in this embodiment has a simple structure and is easy to assemble. When the inner diameter d1 of the connecting section 122 is greater than or equal to the inner diameter d3 of the first connector 11, the pressure drop can be reduced; or when the inner diameter d1 of the connecting section 122 is less than the inner diameter d3 of the first connector 11, the pressure drop can be further increased.

Referring to FIG. 13, in an embodiment of this application, a liquid cooling system is provided. The liquid cooling system includes multiple pipe connection members 60 and multiple liquid cooling plates 30. At least one pipe connection member 60 is a pipe connection assembly 10 provided in the foregoing embodiments. The multiple liquid cooling plates 30 are disposed side by side and spaced apart, and two adjacent liquid cooling plates 30 communicate through at least one pipe connection member 60.

The pipe connection member 60 in this embodiment includes a connector and a connection pipe inserted into each other. When the pipe connection member 60 is not the pipe connection assembly 10 provided in any one of the foregoing embodiments, the connection pipe is a pipe body with a constant inner diameter.

The liquid cooling system provided in this embodiment generally further includes a current collector in addition to the liquid cooling plate 30 and the pipe connection member 60. The current collector is installed at the end portion of the liquid cooling plate 30, and the connector is connected with the current collector to be connected with the liquid cooling plate 30. If the structure of the liquid cooling plate 30 has its own current collecting structure or the connector has its own current collecting function, the connector can also be directly connected with the liquid cooling plate 30.

In this embodiment, the numbers of liquid cooling plates 30 and pipe connection members 60 can be flexibly selected based on a use need.

A working principle of the liquid cooling system provided in this embodiment of this application is as follows:
In a liquid cooling system, multiple liquid cooling plates 30 are generally connected in parallel, and the multiple parallel liquid cooling plates 30 are generally connected with the same liquid inlet pipe 40 and the same liquid discharge pipe 50. However, the pipe connection member 60 used in the related art can only be configured to increase the pressure drop, and an increment range of the pressure drop is limited. The pressure of the liquid in the liquid inlet pipe 40 gradually decreases with flowing of the liquid, and therefore, a flux in a pipe connection member 60 farther away from the liquid inlet of the liquid inlet pipe 40 is smaller, that is, a flux in a liquid cooling plate 30 farther away from the liquid inlet of the liquid inlet pipe 40 is smaller, thereby causing imbalance between liquid volumes in liquid cooling plates 30 at different positions, which is difficult to evenly adjust.

In addition, the pipe connection assembly 10 provided in the foregoing embodiments is used as at least one pipe connection member 60 in the liquid cooling system provided in this embodiment of this application. In this way, the pipe connection member 60 in the related art can be used as the pipe connection member 60 closer to the liquid inlet of the liquid inlet pipe 40, and the pipe connection assembly 10 whose connecting section 122 has the inner diameter greater than or equal to that of the first connector 11 can be used as the pipe connection member 60 farther away from the liquid inlet of the liquid inlet pipe 40. Therefore, flow resistance of the pipe connection member 60 farther away from the liquid inlet of the liquid inlet pipe 40 can be less than flow resistance of the pipe connection member 60 closer to the liquid inlet of the liquid inlet pipe 40, so that the flux in the pipe connection member 60 farther away from the liquid inlet of the liquid inlet pipe 40 can be increased and fluxes in the liquid cooling plates 30 at different positions are equivalent.

Alternatively, the pipe connection assembly 10 whose connecting section 122 has the inner diameter less than that of the first connector 11 can be used as the pipe connection member 60 closer to the liquid inlet of the liquid inlet pipe 40, and the pipe connection member 60 in the related art or the pipe connection assembly 10 whose connecting section 122 has the inner diameter greater than or equal to that of the first connector 11 can be used as the pipe connection member 60 farther away from the liquid inlet of the liquid inlet pipe 40. Therefore, flow resistance of the pipe connection member 60 farther away from the liquid inlet of the liquid inlet pipe 40 can be less than flow resistance of the pipe connection member 60 closer to the liquid inlet of the liquid inlet pipe 40, so that the flux in the pipe connection member 60 farther away from the liquid inlet of the liquid inlet pipe 40 can be increased and fluxes in the liquid cooling plates 30 at different positions are equivalent.

The liquid cooling system provided in this embodiment of this application includes multiple liquid cooling plates 30 and multiple pipe connection members 60. At least one pipe connection member 60 is a pipe connection assembly 10 provided in the foregoing embodiments. Because the pipe connection assembly 10 provided in the foregoing embodiments can reduce the pressure drop or further increase the pressure drop, the pipe connection members 60 with appropriate dimensions are selected and arrangement of different pipe connection members 60 is reasonably set, which can adjust the pressure drops of different branches in the liquid cooling system to balance flows, so that the fluxes in different liquid cooling plates 30 are the same or equivalent and cooling effects of different zones of the liquid cooling system on the battery cells 20 are equivalent.

In some embodiments, the liquid cooling system further includes a liquid inlet pipe 40 and a liquid discharge pipe 50. The liquid inlet pipe 40 is configured to communicate with an external liquid supply system. The liquid cooling plate 30 and the pipe connection member 60 connected with each other form a parallel branch, water inlet ends of multiple parallel branches respectively communicate with the same liquid inlet pipe 40, and water outlet ends of the multiple parallel branches respectively communicate with the same liquid discharge pipe 50.

The liquid inlet pipe 40 and the liquid discharge pipe 50 can be pipe bodies with inner diameters greater than those of the first connection pipe 12 respectively, or pipes with inner diameters equivalent to those of the first connection pipe 12, which can be specifically flexibly selected based on a use need.

Each of the parallel branches can directly communicate with the liquid inlet pipe 40 or the liquid discharge pipe 50, or multiple parallel branches can communicate each other and further communicate with the liquid inlet pipe 40 or the liquid discharge pipe 50, which can be specifically set based on a use need.

The liquid cooling system includes a liquid inlet pipe 40 and a liquid discharge pipe 50, which facilitates communication between the liquid cooling system and an external liquid supply system.

In some embodiments, at least one pipe connection assembly 10 communicates with the liquid inlet of the liquid cooling plate 30.

The liquid cooling plate 30 generally has a liquid inlet and a liquid outlet. Compared with the connection with the liquid outlet of the liquid cooling plate 30, the pipe connection assembly 10 is connected with the liquid inlet of the liquid cooling plate 30, thereby facilitating adjustment of the flux in the liquid cooling plate 30.

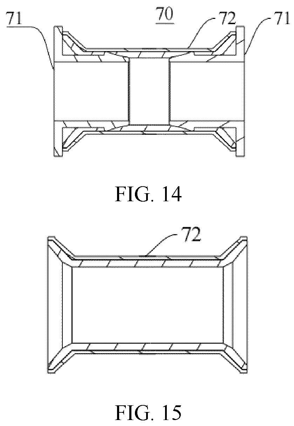

In some embodiments, as shown in FIG. 4 and FIG. 13 to FIG. 15, an inner diameter d1 of the connecting section 122 of the pipe connection assembly 10 communicating with the liquid inlet of the liquid cooling plate 30 is greater than or equal to an inner diameter d3 of the first connector 11. At least one pipe connection member 60 communicating with the liquid inlet of the liquid cooling plate 30 is a first assembly 70. The first assembly 70 includes a second connector 71 and a second connection pipe 72 communicating with each other, the second connector 71 communicates with the liquid cooling plate 30, and an inner cavity of the second connection pipe 72 is a constant-section cavity. The first assembly 70 in all the pipe connection members 60 communicating with the liquid inlets of the liquid cooling plate 30 is located upstream from the pipe connection assembly 10 in a liquid supply direction X of the liquid inlet pipe 40.

The second connector 71 can be an externally threaded end-connected water pipe connector, a ferrule-like water pipe connector, a self-fixing water pipe connector, or the like, which can be specifically flexibly selected based on a use need. The second connector 71 in this embodiment can directly communicate with the liquid cooling plate 30, or can communicate with the liquid cooling plate 30 through another connection structure such as any one or more connection members in a current collector, a pipe, and the like, which can be specifically flexibly selected based on a use need. Sizes and structures of the second connector 71 and the first connector 11 can be the same or different, which can be specifically flexibly selected based on a use need.

The second connection pipe 72 can be a pipe member respectively connected with the two second connectors 71 to implement communication between the two second connectors 71. The second connection pipe 72 can alternatively be a pipe member that has one end communicating with the liquid cooling plate 30 through the second connector 71 and that has another end directly communicating with another liquid cooling plate 30; or the second connection pipe 72 can alternatively be a pipe member that has one end communicating with the liquid cooling plate 30 through the second connector 71 and that has another end communicating with the liquid cooling plate 30 through another pipe member or connection structure, which can be specifically flexibly selected based on a use need.

The inner cavity of the second connection pipe 72 is the constant-section cavity, which means that shapes and sizes of longitudinal cross sections at different positions of the inner cavity of the second connection pipe 72 are the same or equivalent. That is, there are slight differences in the shapes or sizes of the longitudinal cross sections at the different positions of the inner cavity of the second connection pipe 72, which affects no flow state of the liquid flowing through the inner cavity or causes impact within an acceptable range.

Through the solution provided in this embodiment, in the liquid cooling system, in a liquid supply direction of the liquid inlet pipe 40, resistance applied to a liquid flowing through an upstream pipe connection member 60 can be greater than resistance applied to the liquid flowing through a downstream pipe connection member 60, so that a flux in the downstream pipe connection member 60 can be equivalent to that in the upstream pipe connection member 60. The first assembly 70 is made of handy materials, and therefore, the liquid cooling system is easy to assemble and has low manufacturing costs.

In some embodiments, an inner diameter of the connecting section 122 of the pipe connection assembly 10 communicating with the liquid inlet of the liquid cooling plate 30 is less than that of the first connector 11. At least one pipe connection member 60 communicating with the liquid inlet of the liquid cooling plate 30 is a first assembly 70. The first assembly 70 includes a second connector 71 and a second connection pipe 72 communicating with each other, the second connector 71 communicates with the liquid cooling plate 30, and an inner cavity of the second connection pipe 72 is a constant-section cavity. The first assembly 70 in all the pipe connection members 60 communicating with the liquid inlets of the liquid cooling plate 30 is located downstream from the pipe connection assembly 10 in a liquid supply direction of the liquid inlet pipe 40.

Through the solution provided in this embodiment, in the liquid cooling system, in a liquid supply direction of the liquid inlet pipe 40, resistance applied to a liquid flowing through an upstream pipe connection member 60 can be greater than resistance applied to the liquid flowing through a downstream pipe connection member 60, so that a flux in the downstream pipe connection member 60 can be equivalent to that in the upstream pipe connection member 60. The first assembly 70 is made of handy materials, and therefore, the liquid cooling system is easy to assemble and has low manufacturing costs.

In some embodiments, at least two pipe connection members 60 are the pipe connection assemblies 10 and at least two pipe connection assemblies 10 communicate with liquid inlets of the liquid cooling plate 30. All pipe connection assemblies 10 communicating with the liquid inlets of the liquid cooling plate 30 include some pipe connection assemblies 10 whose connecting sections 122 have inner diameters greater than or equal to the inner diameter of the first connector 11, and include other pipe connection assemblies 10 whose connecting sections 122 have inner diameters less than the inner diameter of the first connector 11. All pipe connection members 60 communicating with the liquid inlets of the liquid cooling plates 30 in the liquid supply direction of the liquid inlet pipe 40 include some upstream connecting sections 122 having smaller inner diameters than other downstream connecting sections 122.

The at least two pipe connection assemblies 10 communicate with the liquid inlets of the liquid cooling plate 30, which means that when only two pipe connection members 60 are pipe connection assemblies 10, all the pipe connection assemblies 10 are connected with the liquid inlets of the liquid cooling plate 30; and when at least three (including three) pipe connection members 60 are pipe connection assemblies 10, it is possible that all the pipe connection assemblies 10 are connected with the liquid inlets of the liquid cooling plate 30; or it is possible that some pipe connection assemblies 10 are connected with the liquid inlets of the liquid cooling plate 30, and other pipe connection assemblies 10 are connected with the liquid outlets of the liquid cooling plate 30.

Some upstream connecting sections 122 refer to at least one connecting section located upstream from all the pipe connection members 60 communicating with the liquid inlets of the liquid cooling plate 30, and can be the first connecting section. The number of first connecting sections is greater than or equal to one, and less than the number of all the pipe connection members 60 communicating with the liquid inlets of the liquid cooling plate 30.

The other downstream connecting sections 122 refer to connecting sections other than the first connecting section in all the pipe connection members 60 communicating with the liquid inlets of the liquid cooling plate 30.

Through the solution provided in this embodiment, in the liquid cooling system, in a liquid supply direction of the liquid inlet pipe 40, resistance applied to a liquid flowing through an upstream pipe connection member 60 can be greater than resistance applied to the liquid flowing through a downstream pipe connection member 60, so that a flux in the downstream pipe connection member 60 can be equivalent to that in the upstream pipe connection member 60.

In some embodiments, as shown in FIG. 13, pipe connection members 60 respectively communicating with a liquid inlet and a liquid outlet of the same liquid cooling plate 30 have the same structure.

Generally, the same liquid cooling plate 30 has the liquid inlet connected with one pipe connection member 60, and has the liquid outlet connected with one pipe connection member 60. The pipe connection members 60 respectively communicating with the liquid inlet and the liquid outlet of the same liquid cooling plate 30 have the same structure, which means that the two pipe connection members 60 communicating with the same liquid cooling plate 30 have the same structure.

In this way, when the liquid cooling system is assembled, it is unlikely to install different pipe connection members 60 at incorrect positions, and assembly efficiency can be improved.

Referring to FIG. 13. in an embodiment of this application, a battery 100 is provided, including multiple battery cells 20 and the liquid cooling system provided in the foregoing embodiments. At least some battery cells 20 are disposed between two adjacent liquid cooling plates 30 of the liquid cooling system.

The battery 100 in this embodiment may include a box body or another structure in addition to the battery cell 20 and the liquid cooling system, which can be specifically flexibly selected based on a use need.

The battery 100 provided in this embodiment of this application includes multiple battery cells 20 and the liquid cooling system provided in the foregoing embodiments, and at least some of the multiple battery cells 20 are disposed between the two adjacent liquid cooling plates 30 of the liquid cooling system, so that cooling effects on battery cells 20 at different positions can be equivalent to some extent.

According to some embodiments of this application, as shown in FIG. 4 and FIG. 13 to FIG. 15, this application further provides a battery 100, including multiple battery cells 20 and the liquid cooling system provided in the foregoing embodiments.

The liquid cooling system includes a liquid inlet pipe 40, a liquid discharge pipe 50, multiple pipe connection members 60 and multiple liquid cooling plates 30. The liquid inlet pipe 40 is configured to communicate with an external liquid supply system. The liquid discharge pipe 50 is configured to discharge a liquid from the liquid cooling plate 30. The pipe connection member 60 includes the first connector 11 and the first connection pipe 12 connected with each other, and at least one pipe connection member 60 is the pipe connection assembly 10 provided in the foregoing embodiments. The multiple liquid cooling plates 30 are disposed side by side and spaced apart, and two adjacent liquid cooling plates 30 communicate through at least one pipe connection member 60. The liquid cooling plate 30 and the pipe connection member 60 connected with each other form a parallel branch, water inlet ends of multiple parallel branches respectively communicate with the same liquid inlet pipe 40, and water outlet ends of the multiple parallel branches respectively communicate with the same liquid inlet pipe 40.

The multiple battery cells 20 are distributed in multiple columns spaced apart, one liquid cooling plate 30 is disposed on each side of each column of battery cells 20, and one plate surface of the liquid cooling plate 30 comes into contact with one side surface of the battery cell 20 to transfer heat.

An inner diameter d1 of the connecting section 122 of the pipe connection assembly 10 communicating with the liquid inlet of the liquid cooling plate 30 is greater than or equal to an inner diameter d3 of the first connector 11. At least one pipe connection member 60 communicating with the liquid inlet of the liquid cooling plate 30 is a first assembly 70. The first assembly 70 includes a second connector 71 and a second connection pipe 72 communicating with each other, the second connector 71 communicates with the liquid cooling plate 30, and an inner cavity of the second connection pipe 72 is a constant-section cavity. The first assembly 70 in all the pipe connection members 60 communicating with the liquid inlets of the liquid cooling plate 30 is located upstream from the pipe connection assembly 10 in a liquid supply direction X of the liquid inlet pipe 40.

In this embodiment of this application, an electric apparatus is provided, including the battery provided in the foregoing embodiments, and the battery cell is configured to supply electric energy to the electric apparatus.

The electric apparatus may be any one of the foregoing devices or systems using a battery. A different specific type of electric apparatus includes another structure such as a vehicle frame, in addition to the battery, which can be specifically determined based on the specific type of the electric apparatus.

The electric apparatus provided in this embodiment of this application includes the battery provided in the foregoing embodiments, so that the cooling effect on the battery can be good to some extent and service performance of the electric apparatus is stable.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A pipe connection assembly, **characterized by** comprising:
a first connector, configured to communicate with a liquid cooling plate; and
a first connection pipe, wherein the first connection pipe comprises a sealing section and a connecting section communicating with each other, the sealing section hermetically communicates with the first connector, and an inner diameter of the connecting section is less than that of the sealing section.

2. The pipe connection assembly according to claim 1, **characterized in that** the inner diameter of the connecting section is greater than or equal to that of the first connector.

3. The pipe connection assembly according to claim 1, **characterized in that** the inner diameter of the connecting section is less than that of the first connector.

4. The pipe connection assembly according to claim 1, **characterized in that** the first connector is hermetically inserted into the sealing section.

5. The pipe connection assembly according to any one of claims 1 to 4, **characterized in that** the sealing section is provided in a quantity of two and the two sealing sections are respectively disposed at two ends of the connecting section; and
the first connector is provided in a quantity of two and the two first connectors are inserted into the two sealing sections in one-to-one correspondence.

6. The pipe connection assembly according to claim 5, **characterized in that** inner diameters of the two first connectors are equal.

7. The pipe connection assembly according to any one of claims 1 to 4, **characterized in that** the first connector is sealed by the sealing section with interference.

8. The pipe connection assembly according to any one of claims 1 to 4, **characterized in that** the first connection pipe comprises:
an inner pipe with elasticity, wherein the inner pipe comprises a first pipe section and a second pipe section communicating with each other, and an inner diameter of the second pipe section is less than that of the first pipe section; and
an outer pipe, fitted over the inner pipe, wherein a portion, corresponding to the second pipe section, of the outer pipe and the second pipe section are combined to form the connecting section, and a portion, corresponding to the first pipe section, of the outer pipe and the first pipe section are combined to form the sealing section.

9. The pipe connection assembly according to claim 8, **characterized in that** a restraint structure is protrusively disposed at a portion, corresponding to the second pipe section, of an inner wall of the outer pipe, the restraint structure and the second pipe section are combined to form a combined restraint structure, and the combined restraint structure restrains an insertion depth of the first connector by abutting against the first connector.

10. The pipe connection assembly according to claim 9, **characterized in that** a height of a portion, protruding from the inner wall of the outer pipe, of the restraint structure is greater than or equal to a distance between an outer wall of an insertion end of the first connector and the inner wall of the outer pipe.

11. The pipe connection assembly according to claim 9, **characterized in that** the restraint structure is an annular structure wound on the inner wall of the outer pipe.

12. The pipe connection assembly according to claim 11, **characterized in that** an inner diameter of the annular structure is less than or equal to an outer diameter of the first connector.

13. The pipe connection assembly according to claim 9, **characterized in that** a recessed structure is formed in a portion, corresponding to the restraint structure, of an outer wall of the inner pipe, and the recessed structure is configured to accommodate the restraint structure.

14. The pipe connection assembly according to claim 13, **characterized in that** an outer diameter of the second pipe section is less than that of the first pipe section, and the recessed structure is enclosed by an outer wall of the second pipe section and a connection surface between the second pipe section and the first pipe section.

15. The pipe connection assembly according to claim 8, **characterized in that** the inner pipe is an integral piece;
and/or the outer pipe is an integral piece.

16. The pipe connection assembly according to claim 8, **characterized in that** the inner pipe is a flexible pipe;
and/or the outer pipe is a rigid pipe.

17. The pipe connection assembly according to claim 8, **characterized in that** the inner pipe is a rubber pipe.

18. The pipe connection assembly according to claim 8, **characterized in that** the outer pipe is an alloy pipe or a nylon pipe.

19. The pipe connection assembly according to any one of claims 1 to 4, **characterized in that** the sealing section comprises:
a third pipe section, wherein the third pipe section is connected with the connecting section; and
an elastic layer, wherein the elastic layer is fitted with an inner peripheral wall of the third pipe section.

20. The pipe connection assembly according to claim 19, **characterized in that** the third pipe section and the connecting section are rigid pipe sections respectively.

21. The pipe connection assembly according to claim 19, **characterized in that** the third pipe section and the connecting section are an integrally formed structure.

22. The pipe connection assembly according to any one of claims 1 to 4, **characterized in that** the first connection pipe comprises:
a main pipe; and
an annular member, wherein the annular member is sleeved in the main pipe;
wherein a length of the annular member is less than that of the main pipe in an axial direction of the main pipe, a portion, extending beyond the annular member, of the main pipe forms the sealing section, and a portion, corresponding to the annular member, of the main pipe and the annular member are combined to form the connecting section.

23. The pipe connection assembly according to claim 22, **characterized in that** the annular member comes into hermetic contact with the main pipe.

24. The pipe connection assembly according to any one of claims 1 to 4, **characterized in that** an installation structure is protrusively disposed on an outer wall of the connecting section.

25. A liquid cooling system, **characterized by** comprising:
multiple pipe connection members, wherein at least one pipe connection member is the pipe connection assembly according to any one of claims 1 to 24; and
multiple liquid cooling plates, wherein the multiple liquid cooling plates are disposed side by side and spaced apart, and two adjacent liquid cooling plates communicate through at least one pipe connection member.

26. The liquid cooling system according to claim 25, **characterized in that** the liquid cooling system further comprises:
a liquid inlet pipe, configured to communicate with an external liquid supply system; and
a liquid discharge pipe;
wherein the liquid cooling plate and the pipe connection member connected with each other form a parallel branch, water inlet ends of multiple parallel branches respectively communicate with the same liquid inlet pipe, and water outlet ends of the multiple parallel branches respectively communicate with the same liquid discharge pipe.

27. The liquid cooling system according to claim 26, **characterized in that** at least one pipe connection assembly communicates with a liquid inlet of the liquid cooling plate.

28. The liquid cooling system according to claim 27, **characterized in that** an inner diameter of the connecting section of the pipe connection assembly communicating with the liquid inlet of the liquid cooling plate is greater than or equal to an inner diameter of a first connector;
at least one pipe connection member communicating with the liquid inlet of the liquid cooling plate is a first assembly, the first assembly comprises a second connector and a second connection pipe communicating with each other, the second connector communicates with the liquid cooling plate, and an inner cavity of the second connection pipe is a constant-section cavity; and
the first assembly in all the pipe connection members communicating with the liquid inlets of the liquid cooling plate is located upstream from the pipe connection assembly in a liquid supply direction of the liquid inlet pipe.

29. The liquid cooling system according to claim 27, **characterized in that** an inner diameter of the connecting section of the pipe connection assembly communicating with the liquid inlet of the liquid cooling plate is less than that of the first connector;
at least one pipe connection member communicating with the liquid inlet of the liquid cooling plate is a first assembly, the first assembly comprises a second connector and a second connection pipe communicating with each other, the second connector communicates with the liquid cooling plate, and an inner cavity of the second connection pipe is a constant-section cavity; and
the first assembly in all the pipe connection members communicating with the liquid inlets of the liquid cooling plate is located downstream from the pipe connection assembly in a liquid supply direction of the liquid inlet pipe.

30. The liquid cooling system according to claim 27, **characterized in that** at least two pipe connection members are the pipe connection assemblies and at least two pipe connection assemblies communicate with liquid inlets of the liquid cooling plate;
all pipe connection assemblies communicating with the liquid inlets of the liquid cooling plate comprise some pipe connection assemblies whose connecting sections have inner diameters greater than or equal to the inner diameter of the first connector, and comprise other pipe connection assemblies whose connecting sections have inner diameters less than the inner diameter of the first connector; and
all pipe connection members communicating with the liquid inlets of the liquid cooling plate in the liquid supply direction of the liquid inlet pipe comprise some upstream connecting sections having smaller inner diameters than other downstream connecting sections.

31. The liquid cooling system according to any one of claims 25 to 30, **characterized in that** pipe connection members respectively communicating with a liquid inlet and a liquid outlet of the same liquid cooling plate have the same structure.

32. A battery, **characterized by** comprising multiple battery cells and the liquid cooling system according to any one of claims 25 to 31, wherein at least some battery cells are disposed between two adjacent liquid cooling plates of the liquid cooling system.

33. An electric apparatus, **characterized by** comprising the battery according to claim 32, wherein the battery is configured to provide electric energy for the electric apparatus.
